(19) Europäisches Patentamt
European Patent Office
Office européen des brevets

(11) Numéro de publication: 0 190 727 B1

(12) # FASCICULE DE BREVET EUROPEEN

(45) Date de publication de fascicule du brevet: **24.04.91**

(51) Int. Cl.5: **G06F 15/66**, G06K 9/44

(21) Numéro de dépôt: **86101438.9**

(22) Date de dépôt: **04.02.86**

(54) **Dispositif de traitement d'images.**

(30) Priorité: **06.02.85 FR 8501642**

(43) Date de publication de la demande: **13.08.86 Bulletin 86/33**

(45) Mention de la délivrance du brevet: **24.04.91 Bulletin 91/17**

(84) Etats contractants désignés: **DE FR GB IT SE**

(56) Documents cités:
**US-A- 4 003 024**
**US-A- 4 034 344**
**US-A- 4 484 349**

**ELECTRONICS LETTERS, vol. 16, no. 2, 17 janvier 1980, pages 51-53, Hitchin, Herts, GB; C. ARCELLI et al.: "More about a thinning algorithm"**

**COMPUTER VISION, GRAPHICS AND IMAGE PROCESSING, vol. 27, no. 1, juillet 1984, pages 115-123, Academic Press, Inc., New York, US; F.A. GERRITSEN et al.: "Implementation of cellular-logic operators using 3*3 convolution and table lookup hardware"**

**COMPUTER, vol. 16, no. 1, janvier 1983, pages 36-47, IEEE, Long Beach, California, US; K. PRESTON: "Cellular logic computers for pattern recognition"**

**COMMUNICATIONS OF THE ASSOCIATION FOR COMPUTING MACHINERY, vol. 27, no. 3, mars 1984, pages 236-239, New York, US; T.Y. ZHANG et al.: "A fast parallel algorithm for thinning digital patterns"**

(73) Titulaire: **COMPAGNIE GENERALE D'AUTOMATISME CGA-HBS Société Anonyme dite**
**12, rue de la Baume**
**F-75008 PARIS(FR)**

(72) Inventeur: **Guebey, Patrick**
**34, rue H. Berlioz**
**F-95620 Parmain(FR)**

(74) Mandataire: **Weinmiller, Jürgen et al**
**Lennéstrasse 9 Postfach 24**
**W-8133 Feldafing(DE)**

**EP 0 190 727 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un dispositif de traitement d'images échantillonnées selon un maillage rectangulaire et codées binairement à raison d'un bit par pixel et notamment un dispositif de traitement destinés à la squelettisation de telles images.

Dans de nombreux systèmes de lecture optique et de vision robotique, les images sont binarisées préalablement à leur traitement de manière à permettre ce traitement, ceci est en particulier le cas dans les systèmes de reconnaissance de caractères, préalablement à la phase de reconnaissance proprement dite.

Les images sont alors échantillonnées selon un maillage le plus souvent rectangulaire et chaque pixel, correspondant à une maille, est codé binairement à l'aide d'un bit dont la valeur varie suivant son appartenance au tracé de l'image ou au fond, avec par exemple une valeur un pour le noir et une valeur zéro pour le blanc dans le cas d'un tracé noir sur fond blanc.

Dans les processus de traitement d'image et plus particulièrement dans ceux permettant la reconnaissance de caractères, il est nécessaire de localiser précisément les points remarquables, tels que les noeuds et les bouts des lignes formant le tracé à l'intérieur de l'image.

Un document US-A-U 034 344 décrit un procédé de squelettisation dans lequel chaque image est échantillonnée selon un maillage rectangulaire et codée binairement à raison d'un bit par pixel, les pixels de cette image étant répartis en pixels de fond et pixels de tracé. Chaque pixel y est considéré par rapport à au moins certains des huit pixels qui lui sont contigus dans le maillage rectangulaire. Quatre phases permettant d'éliminer successivement les pixels de tracé considérés comme superflus en application d'un critère de superfluité différent pour chaque phase.

Le grand nombre de pixels composant un tracé fait que la recherche directe des points remarquables conduit à des calculs lourds aux résultats parfois imprécis.

Pour simplifier au maximum le problème de la détection des points remarquables ainsi que celui du suivi d'un tracé, des algorithmes sont recherchés en vue de permettre une squelettisation des images binaires.

Un document "Communication of the association for computing Machinery, Vol 27, N° 3, mars 1984, pages 236-239" décrit, quant à lui, un algorithme de squelettisation prenant en compte les huit pixels entourant un pixel examiné dans une image à maillage rectangulaire, l'élimination des pixels superflus de l'image s'effectue par un processus se poursuivant en boucle réactive tant qu'existent des pixels à éliminer selon les critères de superfluité choisis.

Toutefois, la réalisation logicielle d'algorithmes, tel que celui évoqué ci-dessus, conduit à des temps de calcul incompatibles avec la plupart des utilisations pratiques et en particulier des applications fonctionnant en temps réel, tels que les systèmes de reconnaissance de caractères pour tri postal.

La présente invention propose donc un dispositif de traitement d'images échantillonnées selon un maillage rectangulaire et codées binairement à raison d'un bit par pixel.

Chaque pixel étant considéré par rapport à au moins certains des huit pixels qui lui sont contigus dans le maillage rectangulaire.

Selon une caractéristique de l'invention, le dispositif de traitement, qui est classiquement de type à boucle réactive et qui est piloté par une unité de commande, comporte une boucle réactive reliant la sortie d'une mémoire vive d'image, via au moins un ensemble composé d'unités de registres à décalage, une mémoire morte de fonction et un multiplexeur ; lesdites unités de registres comportent au moins une unité d'écriture et une unité de lecture, cette dernière, placée en sortie de mémoire d'image, fournissant simultanément, en entrée de mémoire de fonction, neuf bits correspondants à un pixel, dit en examen, et aux huit pixels contigus, à chacun des décalages successifs imposés par l'unité de commande, ladite mémoire de fonction redéterminant la valeur du Dit du pixel en examen, à partir des bits présents à ses entrées et selon au moins un critère prédéterminé de superfluité, en vue de l'inscription de la valeur nouvellement déterminée en mémoire d'image, via l'unité d'écriture reliée en ce but par le multiplexeur placé en sortie de mémoire de fonction, chaque entrée du multiplexeur étant apte à être adressée individuellement par l'unité de commande, en fonction du critère de superfluité retenu.

L'invention, ses caractéristiques et ses avantages sont précisés dans la description qui suit en relation avec les figures ci-dessous répertoriées.

La figure 1 présente un schéma d'un dispositif de traitement selon l'invention.

La figure 2 présente un exemple d'image binarisée.

La figure 3 présente une structure de matrice de pixels.

La figure 4 présente un schéma représentatif du fonctionnement du dispositif selon l'invention.

Le dispositif de traitement d'images présenté figure 1 est destiné à traiter des images échantillonnées selon un maillage rectangulaire dont un exemple est donné en figure 2.

Chaque pixel, correspondant à une maille élémentaire, est codé sous forme binaire à l'aide d'un bit suivant son appartenance au fond ou au tracé de l'image, c'est-à-dire soit pratiquement sa couleur ; dans l'exemple présenté on attribue une valeur binaire B aux bits correspondants aux pixels du fond blanc et une valeur binaire A aux bits correspondants aux pixels du tracé noir et l'on donne à B la valeur zéro et à A la valeur un.

L'ensemble des pixels du maillage est classiquement repéré par rapport à deux axes de coordonnées rectangulaires permettant une mise en mémoire de l'image sous forme d'une succession de mots de même longueur. Dans l'exemple de réalisation présenté, chaque mot à une longueur "n" de huit bits et le maillage est conçu pour traiter des images composées de "p" colonnes de m mots chacune, "m" étant ici égal à deux.

De manière usuelle une interface spécialisée 1 (figure 1) est prévue pour fournir au dispositif de traitement d'images 2 les mots représentatifs d'une image à traiter. Cette interface spécialisée 1 ne sera pas décrite ici, dans la mesure où elle est sans rapport direct avec l'objet de la présente invention, elle relie par exemple un lecteur optique associé à un codeur numérique et/ou un moyen de stockage d'informations numériques, non représentés, au dispositif de traitement 2 par l'intermédiaire d'une liaison bidirectionnelle 3.

Une unité de commande 4 comportant classiquement au moins un processeur et une horloge non figurés, assure le bon fonctionnement de l'ensemble constitué par l'interface spécialisée 1 et le dispositif de traitement d'images, par envoi de signaux d'horloge et d'ordres et par analyse des informations reçues en retour, selon des processus usuels qui ne seront pas repris ici.

Les informations numériques susceptibles d'être échangées entre l'interface spécialisée 1 et le dispositif de traitement d'images 2 par l'intermédiaire de la liaison 3 sont stockées dans une mémoire vive, dite d'image, 5 apte à contenir les mots d'au moins une image compatible avec le maillage rectangulaire retenu.

Dans l'exemple de réalisation présenté, le stockage en mémoire d'image 5 s'effectue par mot, chaque mot étant individuellement adressable en écriture et en lecture.

Une boucle réactive est formée autour de la mémoire d'image 5 à l'aide d'un ensemble 6 composé d'unités de registres à décalage, d'une mémoire morte de fonction 7 et d'un multiplexeur 8.

L'ensemble 6 est divisé en au moins une unité d'écriture 6A et au moins une unité de lecture 6B respectivement reliées l'une en entrée et l'autre en sortie de mémoire d'image.

L'unité d'écriture 6A comporte au moins un registre 9, dit de transfert, de type à décalage comme indiqué plus haut, avec une entrée série reliée en sortie du multiplexeur 8 et des sorties parallèles reliées à autant d'entrées correspondantes de la mémoire d'images, il a une capacité d'au moins un mot. Le nombre de registres de transfert 9 est éventuellement augmenté afin de permettre un traitement de type parallèle des pixels d'image, les sorties de ces registres étant alors en parallèle ou multiplexées en entrée de mémoire d'image suivant que la mémoire est apte à mémoriser à une même adresse plusieurs ou un seul mot.

L'unité de lecture 6B comporte au moins un registre récepteur 10 lui aussi de type à décalage, avec un nombre d'entrées reliées en sortie de mémoire d'image 5, qui est au moins égal au nombre de bits d'un mot, sa capacité étant également au moins d'un mot.

Le nombre de registres récepteurs 10 est égal au nombre de registres de transfert 9 et il peut donc être supérieur à un pour permettre le traitement parallèle des pixels d'image, les entrées de même rang des registres récepteurs 10 étant alors connectées en parallèle en sortie de mémoire d'image, via éventuellement un démultiplexeur non figuré, un multiplexage temporel permettant alors successivement, d'une part l'introduction de mots émanant des registres de transfert 9 en mémoire d'image et d'autre part l'introduction sélective dans les registres récepteurs 10 de mots émanant de la mémoire d'image et cela sous le contrôle de l'unité de commande 4 selon des processus connus en eux-mêmes.

Chaque registre récepteur 10 alimente par sa sortie série une suite individuelle de trois registres intermédiaires 11, 12, 13 reliés en série l'un derrière l'autre, chacun étant apte à mémoriser au moins un mot. Dans l'exemple de réalisation présenté les trois registres intermédiaires 11, 12 et 13, qui sont aussi du type à décalage et qui sont identiques, ont une capacité de m x n bits, soit ici seize bits, et leurs trois derniers étages respectifs ont leurs sorties individuellement reliées aux entrées d'adressage de la mémoire de fonction 7.

Chaque adresse de neuf bits fournie par les registres intermédiaires 11, 12, 13 sélectionne un mot de "q" bits dans la mémoire de fonction 7 qui est dûment programmée pour fournir différents mots suivant l'adressage choisi.

Les sorties de la mémoire de fonctions 7 alimente mot par mot le multiplexeur 8, via un registre tampon 14 de type parallèle-parallèle dont les sorties sont reliées à autant de portes 15 de type ET elles-mêmes

reliées à une porte 16 de type OU-exclusif par leurs sorties respectives, lesdites portes 15 étant sélectivement activées par l'unité de commande 4 en fonction des besoins, c'est-à-dire des fonctions désirées.

La sortie de la porte 16, qui constitue la sortie du multiplexeur 8 est reliée d'une part en entrée d'unité d'écriture 6A, d'autre part à une entrée d'une seconde porte 17 de type OU, dont une seconde entrée est reliée à l'avant-dernier étage du registre intermédiaire 12. La sortie de la porte 17 active un compteur 18 formant avec cette porte 17 un circuit détecteur de modifications 19 dont les signaux de sortie, ici du compteur 18, sont fournis à l'unité de commande 4, via éventuellement un registre de stockage temporaire non représenté.

Pour traiter une image et notamment pour la squelettiser c'est-à-dire enlever les pixels considérés comme superflus de son tracé, sans en modifier la connexité, il est nécessaire de respecter certaines contraintes topologiques. En particulier dans certaines applications, il est indispensable de ne pas réduire inconsidérément la longueur des bouts que comporte le tracé et de ne pas créer de discontinuités, par exemple de ne pas ouvrir inconsidérément des boucles fermées dans l'image initiale.

Ainsi par exemple l'échantillonnage d'une image selon un maillage rectangulaire peut conduire à des aberrations telles que celle figurée au niveau des pixels référencés C et D sur la figure 2. Il apparaît en effet sur cette figure que le pixel de fond C devait manifestement être séparé du pixel de fond D par le tracé dans l'image initiale non binarisée, alors qu'il est manifestement contigu si l'on utilise une même notion de connexité pour les pixels noirs de tracé et les pixels blancs du fond. Ceci conduirait alors à considérer qu'un même pixel peut être à la fois dans et hors d'une boucle du tracé et rendrait tout à fait incertaine une telle squelettisation.

Pour éviter cette difficulté on est donc amené à considérer deux ordres de connexité l'un pour les pixels de valeur binaire A du tracé et l'autre pour les pixels de valeur binaire B du fond.

On considère donc comme contigus deux pixels de tracé dont la connexité D1 est définie par une première formule selon laquelle

$$D1\ (P1, P2) = \mathrm{Sup}\ |x1 - x2|, |y1 - y2| = 1,$$

P1 et P2 étant les pixels pris en compte, qui sont ici considérés comme ponctuels et x 1, x 2, y1, y2 étant leurs coordonnées respectives selon les axes rectangulaires de référence de maillage, alors que Sup est la valeur supérieure de l'une ou l'autre des expressions en valeur absolue $|x1 - x2|$ ou $|y1 - y2|$.

On considère par contre comme contigus deux pixels de fond dont la connexité D2 est définie par une seconde formule selon laquelle :

$$D2\ (P1, P2) = |x1 - x2| + |y1 - y2| = 1$$

De ce fait si l'on considère huit pixels contigus à un même neuvième pixel, dit par la suite en examen, d'une matrice trois par trois du maillage rectangulaire, comme présentée en figure 3, les huit pixels P1 à P8 sont contigus au pixel P selon la connexité D1 alors que seuls le sont les pixels P1, P3, P5, P7 selon la connexité D2.

On considère donc ici que deux pixels de tracé sont contigus s'il existe entre eux un chemin d1 suivant lequel ils répondent à la première formule de connexité D1 et que par contre deux pixels de fond sont contigus s'il existe entre eux un chemin d2 suivant lequel ils répondent à la seconde formule de connexité D2.

Ceci permet donc de modifier une image binarisée sans créer de discontinuités non choisies par rapport à l'image initiale.

Tous les pixels de tracé qui sont à d1 distance d'au moins un autre pixel du tracé appartiennent à un même ilot de tracé formant une classe ; toute image porteuse d'un tracé regroupe une ou plusieurs classes de tracé, par exemple un ou plusieurs caractères, et une ou plusieurs classes de fond auxquelles correspondent autant d'ilots de fond et ces classes permettent de définir l'ordre de connexité de l'image pour le tracé et pour le fond.

Il n'y a donc pas de création de discontinuités dans une image par élimination de pixels superflus du tracé, dans la mesure où les pixels éliminés du tracé ne modifient pas les ordres de connexité de l'image modifiée par rapport à l'image initiale tant pour le tracé que pour le fond.

Dans un même ordre d'idée on ajoute une condition supplémentaire visant à ne pas réduire inconsidérément la longueur des bouts libres du tracé en imposant le respect d'une troisième formule selon laquelle les pixels pour lesquels Card N • P = 1 sont à conserver, sachant que P est le pixel de tracé considéré et que Card N • P correspond au nombre de chemins d1 le reliant à d'autres pixels contigus du tracé.

Dans une forme de réalisation préférée le traitement permettant de modifier une image s'effectue par une succession, éventuellement répétée, de quatre phases au cours desquelles on modifie la valeur des bits de pixel de tracé qui sont considérés comme superflus.

En ce but on considère chaque pixel de tracé par rapport aux huit pixels qui lui sont contigus dans le maillage rectangulaire, les pixels situés en bordure externe de maillage étant ici considérés comme bordés par des pixels de fond pour les besoins de l'analyse, si le tracé s'étend jusqu'à de tels pixels.

Chaque phase a pour objet de déterminer la nécessité ou la superfluitéd'un pixel de tracé pris dans un ensemble déterminé de pixels de tracé.

En ce but quatre ensembles disjoints E1, E2, E3 et E4 sont considérés, ils prennent en compte les pixels bordant un pixel de tracé sur ses quatre côtés avec même rang que ce pixel de tracé selon l'un des axes de coordonnées du maillage, c'est-à-dire les pixels P1, P3, PS, P7 pour le pixel P de la figure 3.

Chaque phase consiste donc à déterminer la nécessité ou la superfluité des pixels de tracé appartenant à un ensemble donné, le premier ensemble E1 comportant par exemple tous les pixels de tracé, donc de valeur A, ayant en bordure supérieure un pixel P3 de fond, c'est-à-dire de valeur B, le second ensemble E2 comportant par exemple tous les pixels de tracé n'appartenant pas à l'ensemble E1 et ayant en bordure inférieure un pixel P7 de fond et ainsi de suite, le troisième ensemble E3 comportant tous les pixels de tracé, n'appartenant pas aux ensembles précédents et ayant en bordure droite un pixel P1 de fond, le dernier ensemble E4 comportant les pixels de tracé qui n'appartiennent pas aux trois ensembles précédents et qui ont en bordure gauche un pixel P5 de fond.

Ceci permet d'éliminer successivement les pixels de tracé superflus de chacune des quatre bordures du tracé considérées selon le maillage ; il est donc éventuellement nécessaire de répéter le processus plusieurs fois, si la squelettisation n'est pas obtenue en une seule passe de quatre phases en raison de l'épaisseur du tracé. Les ensembles de pixels considérés à chaque passe sont alors différents bien que répondant aux mêmes critères que les précédents ensembles E1 à E4.

La squelettisation recherchée est obtenue lorsque l'image finale n'est plus modifiable en application du critère de fonction choisi.

Comme indiqué plus haut chaque pixel de tracé est pris en compte lors de son examen par rapport à au moins certains des huit pixels qui le bordent dans la matrice trois par trois l'ayant pour centre.

Dans les conditions de squelettisation énoncées plus haut seize configurations distinctes permettent de résumer les différents cas où un pixel de tracé, situé en bordure de ce tracé, est superflu, ces seize configurations étant elles-même obtenues par rotation quart de tour par quart de tour autour du pixel central à partir des quatre configurations proposées ci-dessous

```
XAX     BBB     XBB     BBB
APB     BPB     APB     BPB
XAX     XAA     XAX     AAX
```

dans lesquelles P est le pixel de tracé et donc de valeur binaire A en examen, X est un pixel de fond ou de tracé dont la valeur n'est pas significative à ce stade, c'est-à-dire pour la détermination de la nécessité ou de la superfluité du pixel en examen, A et B étant les valeurs binaires des pixels de tracé et de fond respectivement.

On peut également déterminer l'existence de bouts et des noeuds du tracé au cours de l'examen des pixels de ce tracé en déterminant la valeur de l'expression Card N • (P) qui définit le nombre de pixels de tracé bordant un pixel en examen, sachant que cette expression est égale à un pour un bout et est supérieure à deux pour un noeud, Card étant le cardinal de l'ensemble formé par les pixels de valeur A qui sont compris parmi les huit pixels bordant le pixel en examen.

Dans la réalisation présentée, la mémoire de fonction 7 reçoit sous forme d'un mot binaire de neuf bits les valeurs binaires d'un pixel en examen et des huit pixels qui le bordent et si ce pixel en examen est de valeur A elle examine sa nécessité ou sa superfluité en fonction des configurations évoquées ci-dessus de manière à fournir en sortie un bit de valeur A, si le pixel est nécessaire, ou éventuellement de modifier sa valeur binaire A initiale en une valeur B, s'il correspond à une configuration permettant de le considérer comme superflu au vu des critères choisis.

Bien entendu la mémoire de fonctions 7 permet d'examiner un pixel en examen par rapport à toute configuration particulière des huit pixels qui le bordent, cette configuration particulière étant éventuellement autre que l'une de celles évoquées ci-dessus ; en effet à chaque adresse de neuf bits peut correspondre un résultat particulier.

Dans l'exemple de réalisation choisie, l'unité de commande 4 permet de sélectionner les signaux de

sortie de l'une ou l'autre d'au moins quatre sorties de la mémoire de fonctions, chaque sortie correspondant à l'une des quatre phases du procédé défini ci-dessus.

Le fonctionnement du dispositif de traitement selon l'invention peut être résumé en liaison avec le schéma simplifié présenté figure 4.

Ce schéma présente symboliquement le contenu de la mémoire d'image 5 et des registres à décalage 9 à 13, dans cette mémoire et dans ces registres, ainsi que la mémoire de fonctions 7 et le multiplexeur 8 relié selon la boucle réactive dont ils sont des éléments constitutifs.

A l'origine une image binarisée, telle que représentée figure 4, est chargée en mémoire d'image 5. Les mots de huit bits qui deux à deux composent les colonnes du maillage rectangulaire sont chargés un à un dans le registre récepteur 10 qui les transmet bit par bit à l'entrée du premier registre intermédiaire 11, le chargement des mots un à un dans le registre récepteur 10 s'effectuant classiquement tous les huit temps d'horloge de décalage de bit, ces temps étant fournis par l'unité de commande 4 - figure 1 -.

Comme indiqué plus haut le nombre d'étages des registres intermédiaires est établi de manière à ce que les sorties des trois derniers étages de chaque registre intermédiaire fournissent les neuf bits correspondants à un pixel en examen et aux huits pixels qui le bordent, le pixel en examen étant à l'avant-dernier étage du registre intermédiaire 12, qui est médian.

De ce fait à chaque décalage dans les divers registres et au cours de l'examen du pixel situé en avant-dernier étage du registre intermédiaire 12, la mémoire de fonction 7 fournit des signaux de sortie, sélectionnables par l'unité de commande 4 au moyen du multiplexeur 8. Dans l'exemple de squelettisation proposé, un signal de valeur binaire A ou B est fourni, en entrée du registre de transfert 9 pour chaque pixel en examen, suivant que ce pixel est considéré comme nécessaire ou superflu.

L'exemple présenté en figure 4 montre un état du système dans lequel le pixel en examen est le pixel supérieur de la demi-colonne 8, un examen antérieur des pixels des demi-colonnes précédentes ayant eu lieu et notamment des demi-colonnes 6 et 7 dont les mots correspondants sont dans le dernier registre intermédiaire 13 pour le mot 6 et les sept premiers bits du mot 7 et dans le registre intermédiaire médian 12 pour le dernier bit du mot 7.

De ce fait le pixel blanc de fond est traduit par la mémoire de fonction 7 en un pixel de fond, si le procédé en cours est celui de squelettisation évoqué plus haut, et le multiplexeur 8 va fournir un bit de valeur binaire B, alors que le premier bit de valeur A du mot 7 qui correspond au pixel supérieur de la demi-colonne 7 a été converti en un bit de valeur B comme le montre le contenu du registre de transfert 9 ou, après décalage, un mot 7 modifié après examen est mémorisé en vue de son enregistrement en mémoire d'image 5 en parallèle ou en lieu et place du mot 7 précédemment enregistré dans cette mémoire, le mot 7 modifié ne comportant plus qu'un bit de valeur A correspondant à un pixel de tracé au lieu de trois bits de valeur A pour le mot 7 initial.

Tous les mots correspondants aux différentes demi-colonnes sont examinés successivement et le compteur 18 permet de mémoriser le nombre de bits modifiés, par sommation des résultats positifs des comparaisons entre bit contenu dans l'avant-dernier étage du registre intermédiaire 12 médian et bit sortant du multiplexeur 8 pendant le même temps, entre deux décalages.

Le procédé de squelettisation est susceptible d'être poursuivi jusqu'au moment où après quatre phases, le compteur n'a enregistré aucun changement, il est bien entendu imaginable de réduire la durée des opérations en parallélisant l'accès à la mémoire de fonction 7 et/ou en parallélisant l'accès à la mémoire d'image 5.

Dans l'exemple présenté en figure 4, on notera aussi que les mots 9, 10, 11 sont décalés l'un derrière l'autre dans les registres intermédiaires 12 et 11 en attente d'examen, le dernier bit du mot 11 étant encore dans le dernier étage du registre récepteur 10, qui doit recevoir le mot 12 correspondant à la demi-colonne 12 lors du décalage suivant la sortie dudit dernier bit de mot 11.

## Revendications

1. Dispositif de traitement d'images échantillonnées selon un maillage rectangulaire et codées binairement à raison d'un bit par pixel, chaque pixel étant considéré par rapport à au moins certains des huit pixels qui lui sont contigus dans le maillage rectangulaire, ledit dispositif, de type à boucle réactive, piloté par une unité de commande (4), étant caractérisé en ce qu'il comporte une boucle réactive reliant la sortie d'une mémoire vive d'image (5) pour les bits de pixel, à l'entrée de ladite mémoire d'image, via au moins un ensemble (6) composé d'unités de registres à décalage, une mémoire de fonction (7) et un multiplexeur (8), lesdites unités de registres comportant au moins une unité d'écriture (6A) et une unité

de lecture (6B), cette dernière, placée en sortie de mémoire d'image, fournissant simultanément, en entrée de mémoire de fonction, neuf bits correspondants à un pixel, dit en examen, et aux huit pixels contigus, à chacun des décalages successifs imposés par l'unité de commande, ladite mémoire de fonction rédéterminant la valeur du bit du pixel en examen, à partir des bits présents à ses entrées et selon au moins un critère prédéterminé de superfluité, en vue de l'inscription de la valeur nouvellement déterminée en mémoire d'image, via l'unité d'écriture reliée en ce but par le multiplexeur placé en sortie de mémoire de fonction, chaque entrée du multiplexeur, qui est reliée à une sortie de mémoire de fonction, étant apte à être adressée individuellement par l'unité de commande, en fonction du critère de superfluité retenu.

2. Dispositif de traitement selon la revendication 1 dans lequel les bits de pixel sont rangés en mémoire d'image par mots égaux correspondants chacun à tout ou partie entière d'une colonne de maillage rectangulaire d'image, caractérisé en ce qu'une unité de lecture (6B) comporte un registre récepteur de mots (10) à sortie série et à entrées parallèles, ces dernières étant reliées en sortie de mémoire d'image, ainsi que trois registres intermédiaires (11, 12, 13), identiques, reliés en série l'un derrière l'autre à la sortie du registre récepteur et fournissant chacun trois Dits successifs par trois sorties successives à la mémoire de fonctions (7) à partir de trois mots successifsrépartis un par un dans les registres de transfert, de manière à transmettre simultanément neuf bits correspondants à un pixel en examen et aux huit pixels contigus.

3. Dispositif de traitement selon la revendication 2, caractérisé en ce qu'il comporte plusieurs unités de lecture (6B) en parallèle de manière à permetttre un traitement parallèle d'autant de bits de pixels en examen, ainsi qu'un nombre correspondant d'unités d'écriture.

4. Dispositif de traitement selon l'une des revendications 2 ou 3, caractérisé en ce qu'il comporte un circuit détecteur de modification (19) relié d'une part en sortie du multiplexeur (8), d'autre part à une seconde des trois sorties du second registre intermédiaire (12) de manière à comparer à l'aide d'un circuit de type OU exclusif (17) la valeur d'un Dit de pixel en examen avec la valeur redéterminée de ce bit fourni par la mémoire de fonction, via le multiplexeur.

## Claims

1. A device for processing images sampled according to a rectangular grid and digitized, with each pixel being represented by one bit and being considered in relation to at least certain ones of the eight contiguous pixels in the rectangular grid, said device being of the feedback loop type and being controlled by a control unit (4), characterized in that it comprises a feedback loop which connects the output of a random access image memory (5) for the pixel bits to the input of said image memory via at least one assembly (6) composed of shift register units, a solid state function memory (7) and a multiplexer (8), said shift register units comprising at least one write unit (6A) and at least one read unit (6B), said read unit being connected to the output of the image memory and being adapted to supply simultaneously, at each of the successive shifts imposed by the control unit, to the input of the function memory nine bits corresponding to one pixel, referred to as being examined, and to eight contiguous pixels, said function memory being adapted to redetermine the value for the bit of the pixel under examination on the basis of the bits present at its inputs and in accordance with at least one predetermined criterion of superfluousness, for the purpose of writing the newly determined value into the image memory via the write unit, which is switched in to this effect by the multiplexer connected to the output of the function memory, each input of the multiplexer which is connected to an output of the function memory being adapted to be addressed individually by the control unit as a function of the retained criterion of superfluousness.

2. A device according to claim 1, wherein the pixel bits are arranged in the image memory to form words of equal length, each of which corresponds to a whole or to a whole portion of a column in the rectangular image grid, characterized in that a read unit (6B) comprises a word receiver register (10) having a serial output and parallel inputs, said parallel inputs being connected to the output of the image memory, said read unit further including three identical intermediate shift registers (11, 12, 13) connected in series one after the other at the output of the receiver register and each delivering three successive bits via three successive outputs to the function memory (7) from three successive words

arranged one by one in the transfer registers, so as to simultaneously transfer nine bits corresponding to a pixel under examination and to eight contiguous pixels.

3. A processing device according to claim 2, characterized in that it includes a plurality of read units (6B) connected in parallel, so as to enable the parallel processing of a corresponding number of bits under examination, and that it includes a corresponding number of write units.

4. A processing device according to claim 2 or 3, characterized in that it includes a modification detector circuit (19) connected on the one hand to the output of the multiplexer (8) and on the other hand to the second of the three outputs of the second intermediate register (12) in order to compare by means of an exclusive-OR gate (17) the bit value of a pixel under examination with the predetermined value of said bit supplied by the function memory via the multiplexer.

## Ansprüche

1. Einrichtung zur Bearbeitung von Bildern, die gemäß einem rechteckigen, mit einem Bit je Pixel binär kodierten Raster abgetastet werden, wobei jedes Pixel im Verhältnis zu mindestens bestimmten, von acht ihm im rechteckigen Raster benachbarten Pixeln bewertet wird, wobei die von einer Befehlseinheit (4) gesteuerte Einrichtung vom Rückkopplungsschleifentyp ist und dadurch gekennzeichnet ist, daß sie eine Rückkopplungsschleife aufweist, die den Ausgang eines Arbeitsspeichers (5) für die Pixelbits des Bilds über mindestens eine Gruppe (6) von Schieberegistereinheiten, einen Funktionsspeicher (7) und einen Multiplexer (8) mit dem Eingang des Bildspeichers verbindet, wobei die Registereinheiten mindestens eine Schreibeinheit (6A) und eine Leseeinheit (6B) aufweisen, die an den Ausgang des Bildspeichers angeschlossen ist und gleichzeitig an den Eingang des Funktionsspeichers bei jeder der von der von der Befehlseinheit ausgelösten aufeinanderfolgenden Schiebeschritte neun Bits liefert, die einem einzelnen als in Prüfung befindlich bezeichneten Pixel und acht angrenzenden Pixeln entsprechen, wobei der Funktionsspeicher den Wert des in Prüfung befindlichen Pixels aufgrund der Bits, die an seinen Eingängen liegen, sowie gemäß mindestens einem vorbestimmten Überflüssigkeitskriterium neu bestimmt, und zwar in Hinblick auf die Einschreibung des neu bestimmten Werts in den Bildspeicher über die Schreibeinheit, die zu diesem Zweck durch den mit dem Ausgang des Funktionsspeicher verbundenen Multiplexer angeschlossen wird, wobei jeder Eingang des Multiplexers, der mit einem Ausgang des Funktionsspeichers verbunden ist, individuell in Abhängigkeit vom gewählten Überflüssigkeitskriterium über die Befehlseinheit adressiert werden kann.

2. Bearbeitungseinrichtung nach Anspruch 1, bei der die Pixelbits im Bildspeicher nach gleich langen Wörtern gruppiert sind, von denen jedes dem Ganzen oder einem ganzen Teil der Spalte des rechteckigen Bildrasters entspricht, dadurch gekennzeichnet, daß eine Leseinheit (6B) ein Wortempfangsregister (10) mit einem Serieneingang und mit Parallelausgängen, die mit dem Ausgang des Bildspeichers verbunden sind, und drei identische Zwischenregister (11, 12, 13) aufweist, die in Reihe hintereinander mit dem Ausgang des Empfangsregisters verbunden sind und je aufgrund von drei aufeinanderfolgenden einzeln in den Transferregistern verteilten Wörtern über drei aufeinanderfolgende Ausgänge drei aufeinanderfolgende Bits liefern, derart, daß gleichzeitig neun Bits übertragen werden, die einem einzelnen in Prüfung befindlichen Pixel und acht angrenzenden Pixeln entsprechen.

3. Bearbeitungseinrichtung nach Anspruch 2, dadurch gekennzeichnet, daß sie mehrere parallelgeschaltete Leseeinheiten (6B) aufweist, so daß eine parallele Behandlung ebensovieler in Prüfung befindlicher Pixel stattfinden kann, und daß sie eine entsprechende Anzahl von Schreibeinheiten besitzt.

4. Bearbeitungseinrichtung nach Anspruch 2 oder 3, dadurch gekennzeichnet, daß sie eine Anderungserfassungsschaltung (19) aufweist, die einerseits an den Ausgang des Multiplexers (8), andererseits an einen zweiten der drei Ausgänge des zweiten Zwischenregisters (12) angeschlossen ist, derart, daß mit Hilfe einer Exklusiv-ODER-Schaltung (17) der Wert eines in Prüfung befindlichen Bits mit dem vom Funktionsspeicher über den Multiplexer gelieferten neu bestimmten Wert dieses Bits verglichen wird.

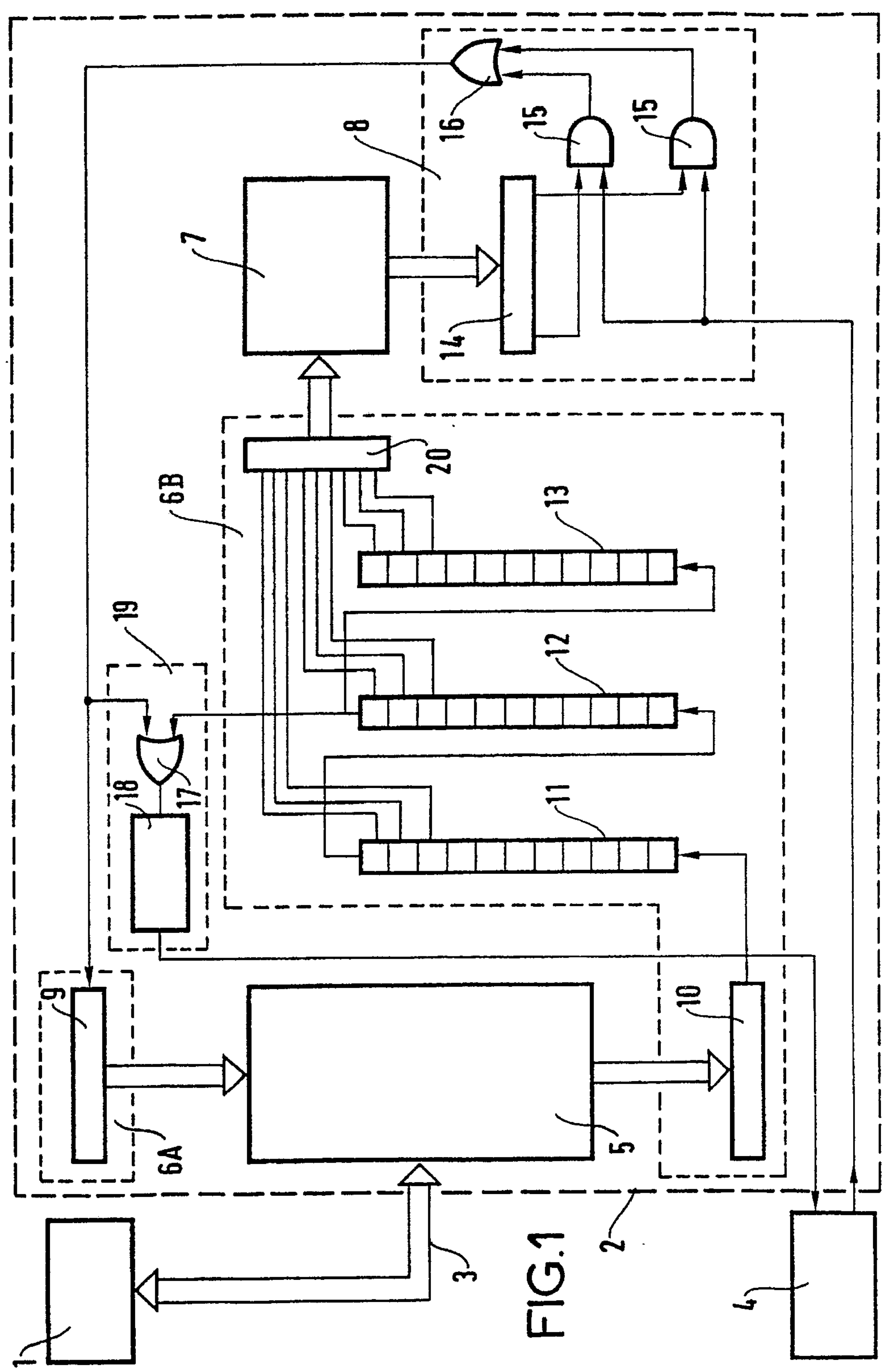

FIG.1

FIG.2

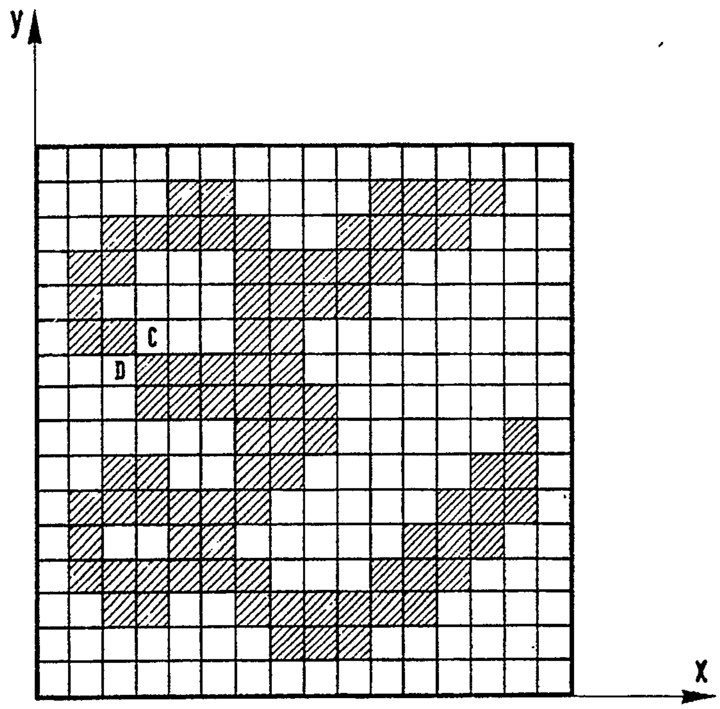


FIG.3

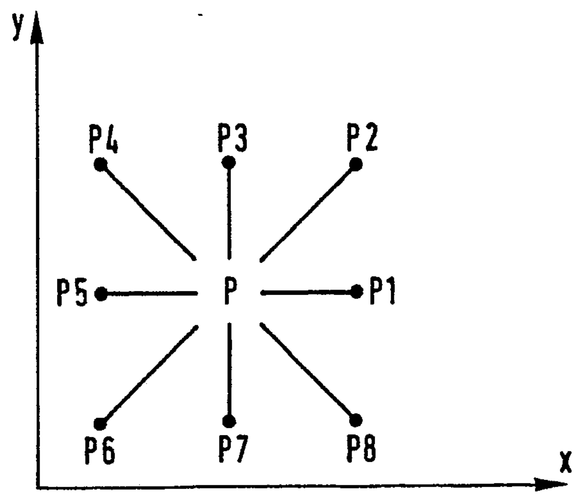

FIG.4

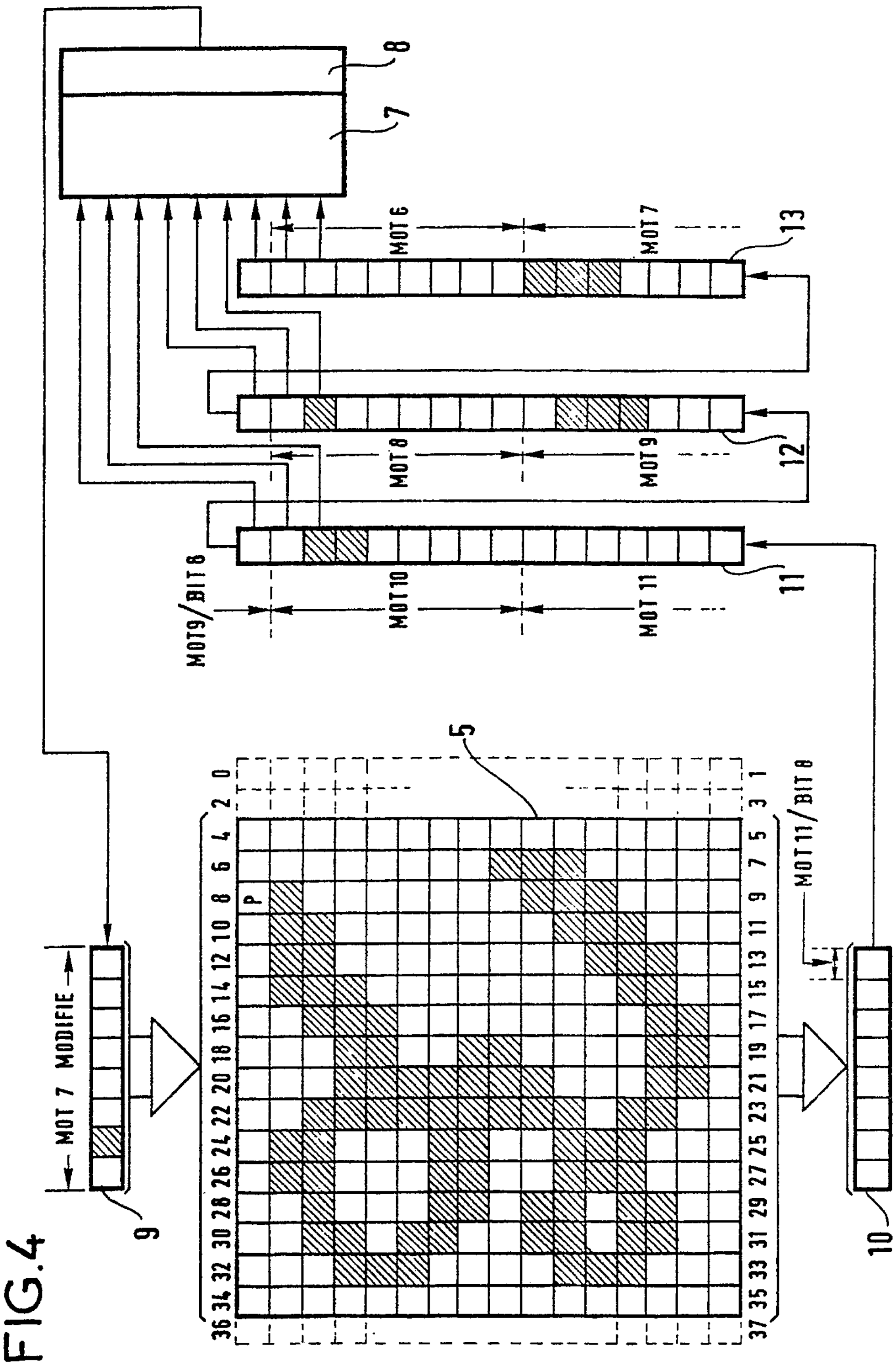

8
7
MOT 6
MOT 7
13
MOT 8
MOT 9
12
MOT9/BIT 8
MOT10
MOT 11
11
5
MOT 7 MODIFIE
9
P
MOT11/BIT 8
10
0 2 4 6 8 10 12 14 16 18 20 22 24 26 28 30 32 34 36
1 3 5 7 9 11 13 15 17 19 21 23 25 27 29 31 33 35 37